# EUROPEAN PATENT APPLICATION

(11) **EP 1 790 903 A1**
(43) Date of publication of application: **30.05.2007**
(21) Application number: 06255607.1
(22) Date of filing: 31.10.2006
(51) Int. Cl.: F16N 11/08, F16N 29/00

(54) **Lubricant supply device**

(30) Priority: 28.11.2005 JP 2005342159
(71) Applicant: FANUC LTD, Minamitsuru-gun, Yamanashi 401-0597 (JP)
(72) Inventor: Urata, Masahiko, Minamitsuru-gun Yamanashi, 401-0511 (JP); Nishimura, Koichi, Susono-shi Shizuoka, 410-1115 (JP)
(74) Representative: Billington, Lawrence Emlyn

(57) **Abstract**

A lubricant supply device that reliably removes air from lubricant such as grease and supplies the grease to an object of lubrication. An air detection sensor that detects air is disposed in a grease introduction hole of a grease transporting path. Grease supplied by a pump passes through the grease introduction hole, a chamber divided by a spool and a grease discharge port, and is introduced into the lubricated parts of a machine. If air in the grease is detected by the air detection sensor, a controller drives a switching valve, moves the spool by pressurized air, and connects the grease introduction hole to an air exhaust port. The air mixed in with the grease is then expelled from the air exhaust port. When the air detection sensor no longer detects air, the controller switches the switching valve, returns the spool to its original position, and discharges grease from the grease discharge port. The lubricant supply device detects and removes air that is mixed in with the grease just before the grease is introduced into the lubricated parts of the machine, and therefore can remove the air more reliably.

## Description

### BACKGROUND OF THE INVENTION

### 1. Field of the Invention

The present invention relates to a lubricant supply device for supplying lubricant such as grease to an object of lubrication such as a part of various kinds of machines requiring lubrication.

### 2. Description of Related Art

In a lubricant supply device that supplies lubricant such as grease to an object of lubrication such as a part of a machine, in order to prevent air from getting into the supplied lubricant such as grease, air is removed from the lubricant and then the lubricant with air removed is supplied to the object of lubrication. If air is mixed into the grease or other such lubricant, because of the air present in the lubricant to be supplied, even if pressure is applied to the lubricant in order to continue to supply lubricant to the object of lubrication, the mixed-in air is compressed without the pressure being transmitted to the lubricant in front of it and the grease or other such lubricant does not reach every corner of the object of lubrications such as the lubricated parts of a variety of machines. For the above reason, air is removed from the grease or other such lubricant and the lubricant with air removed is supplied to the object of lubrication.

For example, in a method of greasing in which a cartridge filled with grease is loaded into a cartridge gun and supplied to an object of lubrication, providing an air bleed hole at the distal end of the grease filling area when filling an empty cartridge with grease so that, when a follow plate that is pushed back as the grease fills retreats to the rear of the bleed hole, any air that is mixed in with the grease is expelled together with any excess grease is known (JP 7-61484A).

In addition, a discharge device equipped with a supply tank that supplies grease to a discharge valve that discharges grease that is provided with an air bleed tap so that air bubbles do not get into the grease that is supplied from the supply tank is also known (JP 9-303683A).

The methods used conventionally for removing air from grease or other lubricants and supplying the lubricant to object of lubrications such as the lubricated parts of a machine are methods that remove air from inside a container that holds the lubricant (that is, a cartridge or a supply tank) like those described in JP 7-61484A and JP 9-303683A.

However, even providing the tank or other such receptacle that holds the lubricant with means for removing air and removing the air, there is a possibility that air mixed into the lubricant is not fully removed, and therefore there is no guarantee that air is not mixed into the lubricant that is actually supplied to the object of lubrication.

### SUMMARY OF THE INVENTION

The present invention provides a lubricant supply device that reliably removes air from lubricant to be supplied to an object of lubrication and supplies the lubricant to the object of lubrication.

A lubricant supply device of the present invention supplies lubricant pressurized by a pump to an object of lubrication through a lubricant transporting path. The device comprises: a sensor for detecting air in the lubricant transporting path; air discharge means for discharging air from the lubricant transporting path; and a controller for controlling the air discharging means to discharge air from the lubricant transporting path in response to an air detection signal from the sensor.

The air discharge means may comprises switching means for selectively connecting the lubricant transporting path at a position downstream of the sensor to either a port for transporting lubricant or a port for discharging air; and actuating means for actuating the switching means, and the controller may control the actuating means to actuate the switching means so that the lubricant transporting path is connected to the port for discharging air when the air detection signal is issued from the sensor.

Air mixed in with the lubricant is detected and removed in the lubricant transporting path, and therefore the air is removed just before the grease is introduced into the object of lubrication, thus enabling lubricant in which no air is mixed into the lubricant to be more reliably supplied to the object of lubrication.

### BRIEF DESCRIPTION OF THE DRAWINGS

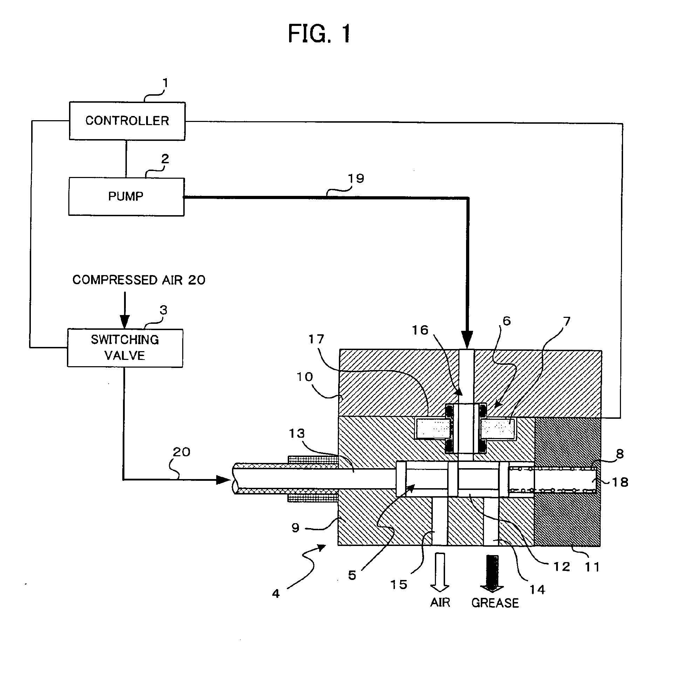

FIG. 1 is a diagram showing a schematic illustrative view of one embodiment of the present invention.

### DETAILED DESCRIPTION

A detailed description will now be given of a preferred embodiment of the present invention, with reference to the drawing.

FIG. 1 is a diagram showing a schematic illustrative view of one embodiment of the present invention. The present embodiment is comprised of a main unit 4 of a lubricant supply device, a controller 1 that controls the main unit 4, a pump 2 that pressurizes and supplies grease (lubricant) to the main unit 4, and a switching valve 3 that switches compressed air that drives a spool 5 that switches and connects a grease transporting path to either a grease discharge port or an air exhaust port.

The main unit 4 is comprised of a path switching member 9 in which is disposed a spool 5 that forms switching means for switching and connecting the lubricant transporting path to either a grease transporting port 14 or an air discharge port 15, a sensor unit presser member 10, and a return spring storage member 11. A spool storage hole 12 that contains the spool 5 that forms the switching means, an introduction hole 13 for the compressed air that drives the spool 5, a sensor container 17 that includes an hole section that forms a grease introduction hole 16, the grease transporting port 14 and the air discharge port 15 are provided on the path switching member 9. Moreover, a hole section that forms the grease introduction hole 16 is provided on the sensor unit presser member 10 so as to fix the sensor unit 6 contained in the sensor container 17 in place when the sensor unit presser member 10 is coupled to the path switching member 9. A hole 18 that contains a return spring 8 is provided in the return spring storage member 11.

The spool 5 forms a switching means that connects the grease introduction hole 6 with either the grease transporting port 14 or the air discharge port 15. As is described later, when compressed air is not acting on the spool 5, the action of the return spring 8 positions the spool 5 so that the grease introduction hole 16 and the grease transporting port 14 communicate with each other. In addition, the sensor unit 6 is equipped with an air detection sensor 7 consisting of a light sensor composed of a light-emitting element and a light-receiving element.

The spool 5 is inserted into the spool storage hole 12 of the path switching member 9, the return spring 8 is inserted into the hole 18 of the return spring storage member 11, the path switching member 9 and the return spring storage member 11 are connected by a bolt or the like, and the spool 5 is pushed by the force of the return spring toward one side of the spool storage hole 12 (to the left in FIG. 1), connecting the grease introduction hole 16 and the grease transporting port 14.

In addition, the sensor unit 6 is disposed within the sensor container 17 of the path switching member 9 and the sensor unit presser member 10 is tightly connected to the path switching member 9 by a bolt or the like, aligning the hole section of the grease introduction hole 16 in the path switching member 9 with the hole section of the grease introduction port 16 in the sensor unit presser member 10.

Grease 19 is supplied to the grease introduction hole 16 through a grease supply path. In addition, a switching valve 3 that supplies compressed air 20 is connected to the compressed air introduction hole 13 as a driving means for driving the spool 5 of the switching means.

The controller 1 is connected to the air detection sensor 7, the pump 2 and the switching valve 3. The controller 1 turns the pump on and off, and controls the switching valve 3 based on signals from the air detection sensor.

When supplying the grease 19 to an object of lubrication such as the lubricated parts of a machine, the compressed air 20 is not introduced into the compressed air introduction hole 13 and the pressure of the return spring 8 causes the spool 5 to put the grease introduction hole 16 and the grease transporting port 14 into the state of communication shown in FIG. 1. When the pump 2 is operated, the grease 19 is discharged from the grease transporting port 14 via the grease introduction hole 16 and a chamber in the spool storage hole 12 that is divided by the spool 5, and supplied to the object of lubrication such as the lubricated parts of the machine.

If during this supply of grease air that is mixed in with the grease passes that portion of the grease introduction hole 16 at which the sensor unit 6 is located, the air detection sensor detects the presence of this air and outputs an air detection signal to the controller 1. The controller 1 receives the air detection signal, switches the switching valve 3, introduces the compressed air 20 into the compressed air introduction hole 13, and moves the spool to the right in FIG. 1 against the force of the return spring 8, connecting the grease introduction hole 16 with the air discharge port 15. As a result, the air that is mixed in with the grease 19 is expelled from the air discharge port 15 and is not supplied to the object of lubrication such as the lubricated parts of the machine via the grease transporting port 14.

When the air detection sensor 7 no longer detects air, the air detection signal turns off, causing the controller 1 to switch the switching valve and stopping the supply of compressed air to the compressed air introduction hole 13. The spool 5 is then moved to the left in FIG. 1 by the force of the return spring 8, the grease introduction hole 16 and the grease transporting port 14 are aligned, and the grease 19 is supplied to the lubricated parts of the machine.

It should be noted that, in the embodiment described above, a light sensor is used as the air detection sensor. However, alternatively, it is possible to use another sensor that is capable of detecting air in the lubricant, such as a sensor that detects air using sound waves. In addition, although compressed air, a return spring and the like are used as means for driving the spool of the switching means that switches the lubricant transporting path, alternatively the spool may be driven using hydraulics.

## Claims

1. A lubricant supply device for supplying lubricant pressurized by a pump to an object of lubrication through a lubricant transporting path, comprising:
a sensor for detecting air in the lubricant transporting path;
air discharge means for discharging air from the lubricant transporting path; and
a controller for controlling said air discharging means to discharge air from the lubricant transporting path in response to an air detection signal from said sensor.

2. A lubricant supply device according to claim 1, wherein said air discharge means comprises: switching means for selectively connecting the lubricant transporting path at a position downstream of said sensor to either a port for transporting lubricant or a port for discharging air; and actuating means for actuating said switching means,
wherein said controller controls said actuating means to actuate said switching means so that the lubricant transporting path is connected to the port for discharging air when the air detection signal is issued from said sensor.
